# EUROPEAN PATENT SPECIFICATION

(11) **EP 1 998 654 B1**
(45) Date of publication and mention of the grant of the patent: **06.10.2010**
(21) Application number: 06785685.6
(22) Date of filing: 27.06.2006
(51) Int. Cl.: A47J 27/08

(54) **METHOD AND APPARATUS FOR DISPENSING FRESH COOKING OIL**
VERFAHREN UND VORRICHTUNG ZUR AUSGABE VON FRISCHEM SPEISEÖL
PROCÉDÉ ET APPAREIL POUR DISTRIBUER DE L'HUILE DE CUISSON FRAÎCHE

(30) Priority: 24.03.2006 US 785727 P; 12.06.2006 US 423554
(43) Date of publication of application: 10.12.2008
(73) Proprietor: Frontline International, Inc., Barberton OH 44203 (US)
(72) Inventor: PALAZZO, John, W., Akron, OH 44333 (US)
(74) Representative: Legg, Cyrus James Grahame
(86) International application number: PCT/US2006/025059
(87) International publication number: WO 2007/111624

(56) References cited:
- EP-A1- 0 296 549
- US-A- 3 649 290
- US-A- 5 243 898

## Description

### I. Background of the Invention

### A. Field of Invention

This application claims priority to U.S. Serial No. 60/785,727, filed March 24, 2006, entitled Method And Apparatus For Dispensing Fresh Cooking Oil. The present invention relates to an oil dispensing device, more particularly to a cooking oil dispensing device, and even more particularly to a fresh cooking oil dispensing device.

### B. Description of the Related Art

Currently, a bulk cooking oil system has filter, waste, supply, and fryer stations connected by piping for movement of oil along preselected pipe paths. The filter station functions to filter cooking oil from the fryer station and has a valve adapted to open and close pipe lines that lead to and away from the filter station. The waste station stores used oil and has a valve adapted to open and close a pipe line leading to and away from the waste station. The supply station stores oil to be used at the fryer station for cooking food products and also has a valve adapted to open and close a pipe line leading to and away from the supply station. The fryer station has a fryer that receives and heats the cooking oil to cook food products and a valve adapted to open and close a pipe line leading to and away from the fryer station. All of the various valves are selectively operated and controlled so that a predetermined pipe path can be established between identified stations. A pump moves the oil along the selected pipe path. The existing system requires bulk oil tanks.

The present invention provides methods and apparatuses for dispensing fresh cooking oil in an automated and efficient fashion. Another advantage of this invention is that wiring is no longer needed between the pump motor and the dispensing wand or nozzle. The invention described herein uses pressurized lines and controls to cycle the pump on and off, thus offering a more reliable, safe, and easy system to install and maintain. Another advantage of the present invention is that installation is quicker and more flexible, and the present invention is generally not hindered by space or size limitations. The present invention allows the user to work with smaller oil containers and the user has the safety and efficiency of fresh oil, but is not required to commit to bulk oil purchasing. The difficulties inherit in the art are therefore overcome in a way that is simple and efficient, while providing better and more advantageous results.
EP 0 296 549 discloses a pressurised water circuit for delivering superheated water to a spaghetti cooker. The system comprises a pump for delivering water under pressure to a branch in the pipework. Above the branch are connected two water heating vessels and an outlet valve connected in series. Below the branch is connected a separator drum which is connected from a port in its lower end to a port in the lower end of a plenum chamber by a further pipe. The plenum chamber has a pressure switch connected to the air space at the top of the plenum chamber and operates to activate the pump when the pressure drops below a first point and deactivates the pump when the pressure rises above a second higher point.
US 5 243 898 discloses a pressurised frying device. A frying chamber is supplied with oil from tanks via a pump and an oil heater.

### C. Definitions

**"On"** pressure - the pressure, measured in psi (pounds per square inch), at which, once exceeded, the system begins to create a suction to remove fluid from the fluid reservoir.

**"Off" pressure** - the pressure, measured in psi, at which, once reached, the system ceases removing fluid from the fluid reservoir.

**Housing -** a case or enclosure (as for a mechanical part or an instrument).

**Pump -** a device that raises, transfers, or compresses fluids or that attenuates gases especially by suction or pressure or both.

**Expansion tank** - any device utilized to control and maintain the pressure of a fluid in a contained system.

### II. Summary of the Invention

According to one aspect of the present invention, a pump mechanism pumps fresh cooking oil in an automated fashion.

In accordance with another aspect of the present invention, an expansion tank is used to control the operation of the pump through the pressure switch. The expansion tank will accumulate oil at a rate that is dependant on the on pressure and off pressure. It provides not only a reservoir for the fresh oil, but dampens the pressure effects of the pump and provides for smooth, constant flow of oil.

In accordance with another aspect of the present invention, the pump is switched on and off automatically.

In accordance with another aspect of the present invention, the pumping mechanism is contained within a box that can be placed on a wall or in the ceiling at the back of a restaurant.

In accordance with another aspect of the present invention, better monitoring of oil usage is created.

In accordance with another aspect of the present invention, a fluid dispensing apparatus includes a pump, a motor, the motor operatively connected to the pump, a pressure switch having an on pressure and an off pressure, wherein the off pressure is greater than the on pressure, an expansion tank, an expandable bladder, the expandable bladder operatively connected within the expansion tank, the expandable bladder having a pressure, the pressure being set at approximately the on pressure, tubing, the tubing operatively connected to the pump, and a fluid dispenser.

In accordance with another aspect of the present invention, the pump is at a remote location from the fluid dispenser.

In accordance with another aspect of the present invention, the apparatus further comprises a pressure relief valve.

In accordance with another aspect of the present invention, the pump, the motor, the pressure switch, the expansion tank, and the expandable bladder are located within a housing.

In accordance with another aspect of the present invention, the on pressure is greater than 10 psi (70kPa) and the off pressure is less than 75 psi (520kPa).

In accordance with another aspect of the present invention, the on pressure is approximately 30 psi (210kPa) and the off pressure is approximately 50 psi (350kPa).

In accordance with another aspect of the present invention, the pressure relief valve is set at approximately 75 psi (520kPa).

In accordance with another aspect of the present invention, the apparatus is connected to an associated wall.

In accordance with another aspect of the present invention, the apparatus further comprises tubing and an oil reservoir, the tubing operatively connected to an inlet, the inlet being operatively connected to the pump.

In accordance with another aspect of the present invention, the fluid dispenser dispenses oil into an associated fryer.

In accordance with another aspect of the present invention, the apparatus further comprises a timer relay.

In accordance with another aspect of the present invention, after the pump has been shut off, decreasing the pressure within the expansion tank by dispensing fluid and automatically turning on the pump when the pressure within the expansion tank reaches a predetermined level.

In accordance with another aspect of the present invention, the process of automatically turning on and/or shutting off the pump can be repeated multiple times.

In accordance with another aspect of the present invention, the predetermined level for shutting off the pump is approximately 50 psi (350kPa).

In accordance with another aspect of the present invention, the predetermined level for turning the pump back on is approximately 30 psi (210kPa).

In accordance with another aspect of the present invention, the method further includes providing a pressure relief valve to automatically shut off power when a predetermined pressure is reached and providing a timer relay for preventing the pump from continuous running if the reservoir is empty.

In accordance with another aspect of the present invention, the method is used for dispensing fresh cooking oil from an oil reservoir into an associated fryer.

In accordance with another aspect of the present invention, the pump and expansion tank are located remotely from an associated fryer.

Still other benefits and advantages of the invention will become apparent to those skilled in the art to which it pertains upon a reading and understanding of the following detailed specification.

### III. Brief Description of the Drawings

The invention may take physical form in certain parts and arrangement of parts, at least one embodiment of which will be described in detail in this specification and illustrated in the accompanying drawings which form a part hereof and wherein:

FIGURE 1 shows a diagram of the inventive system;

FIGURE 2 shows a perspective view of the housing;

FIGURE 3 shows another perspective view of the housing;

FIGURE 4 shows another perspective view of the housing;

FIGURE 5 shows another perspective view of the housing;

FIGURE 6 shows another perspective view of the housing;

FIGURE 7 shows another perspective view of the housing;

FIGURE 8 shows another perspective view of the housing;

FIGURE 9 shows another perspective view of the housing;

FIGURE 10 shows a plan view of the cover of the housing;

FIGURE 11 shows another view of the cover of the housing;

FIGURE 12 shows a perspective view of the ear of the housing;

FIGURE 13 shows a perspective view of the face of the housing;

FIGURE 14 shows a perspective view of the face of the housing;

FIGURE 15 shows a perspective view of the base of the housing;

FIGURE 16 shows a plane view of the base of the housing;

FIGURE 17 shows the inventive system;

FIGURE 18 shows a perspective view of the pump and the pressure switch;

FIGURE 19 shows a perspective view of the pump;

FIGURE 20 shows a perspective view of the pressure switch and the pressure relief valve;

FIGURE 21 shows a perspective view of the disconnect fitting and the tubing; and,

FIGURE 22 shows a perspective view of the inventive system with a timer relay.

### IV. Description of the Invention

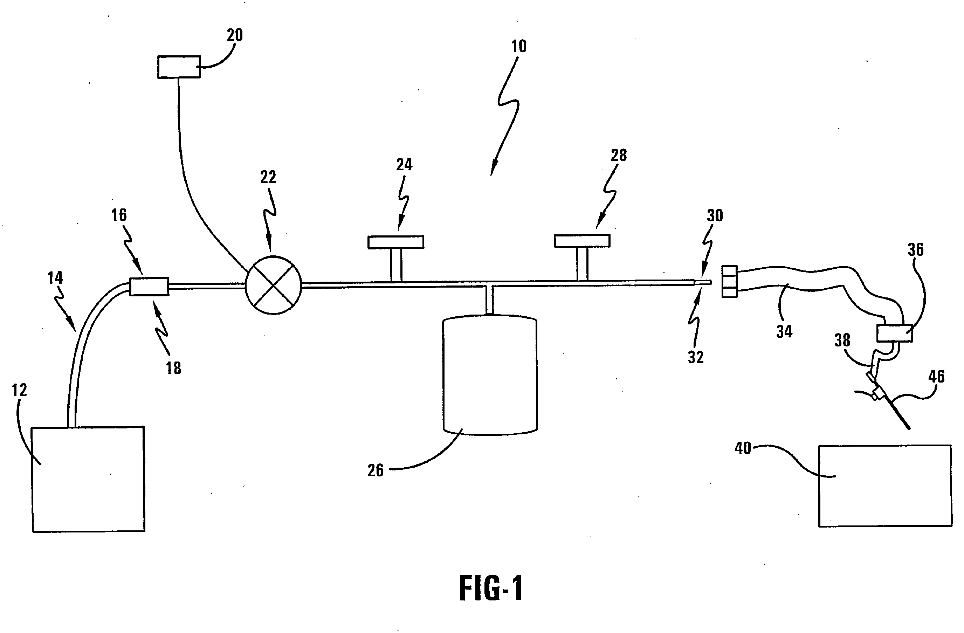

Referring now to at least one embodiment of the invention, FIGURE 1 shows an oil dispensing system 10 which includes an oil reservoir 12, tubing 14, an inlet 18 with a disconnect fitting 16, a pump 22 with an on/off switch 20, a pressure switch 24, an expansion tank 26, a pressure relief valve 28, an outlet 32 with a disconnect fitting 30, plumbing tubing 34, a dispensing wand 46 with a disconnect fitting, and a fryer 40. In this embodiment, the tubing 14 is inserted into the oil reservoir 12 to remove the fresh cooking oil. The tubing 14 has an opening at both ends, and at one end has an inlet valve 18 with a disconnect fitting 16. This inlet 18 can be selectively attached and removed from the pump 22. The inlet 18 is attached to the pump 22, which in one embodiment is a five-gallon per minute pump having a ⅓ horsepower motor. The pump 22 has an on/off switch 20. The pump 22 is connected to a pressure switch 24, which is set to a particular pressure. Connected to the pressure switch 24 is an expansion tank 26, which is connected to a pressure relief valve 28. The pressure relief valve 28 can be located outside or inside of the outlet 32, depending on the embodiment. The plumbing tubing 34 is connected to the outlet 32 and the pressure relief valve 28. The disconnect fitting of the wand 46 can be connected to the plumbing tubing 34. It is to be understood that the type of pump 22, tubing 14, 34, inlets 18, outlets 32, motors, expansion tank 26, switches 24, and valves 28 is not intended to be limited by this invention. Any type can be used, as long as chosen using sound engineering judgment.

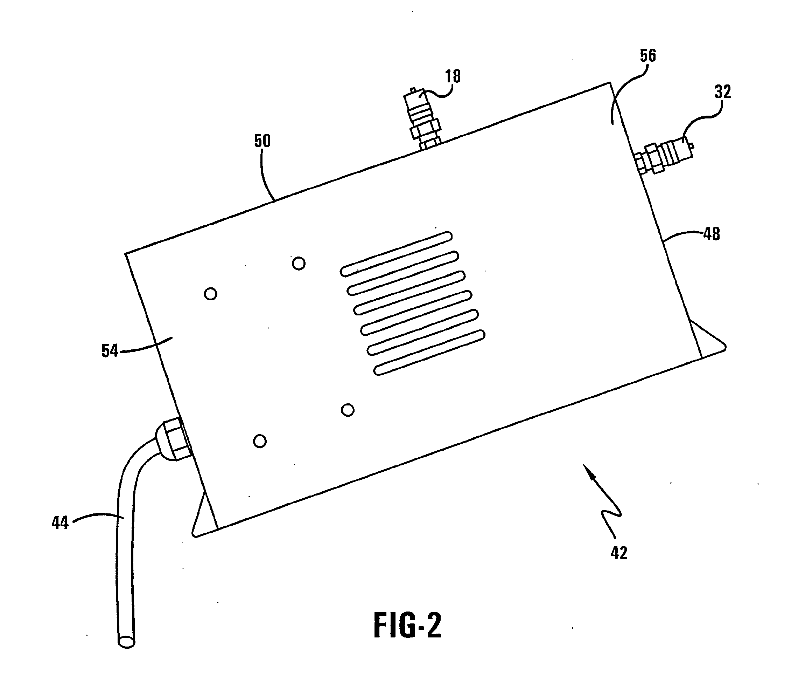

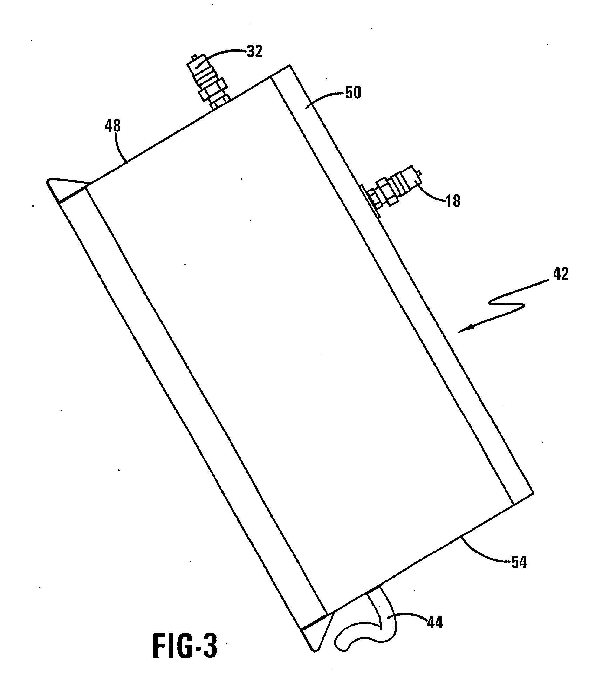

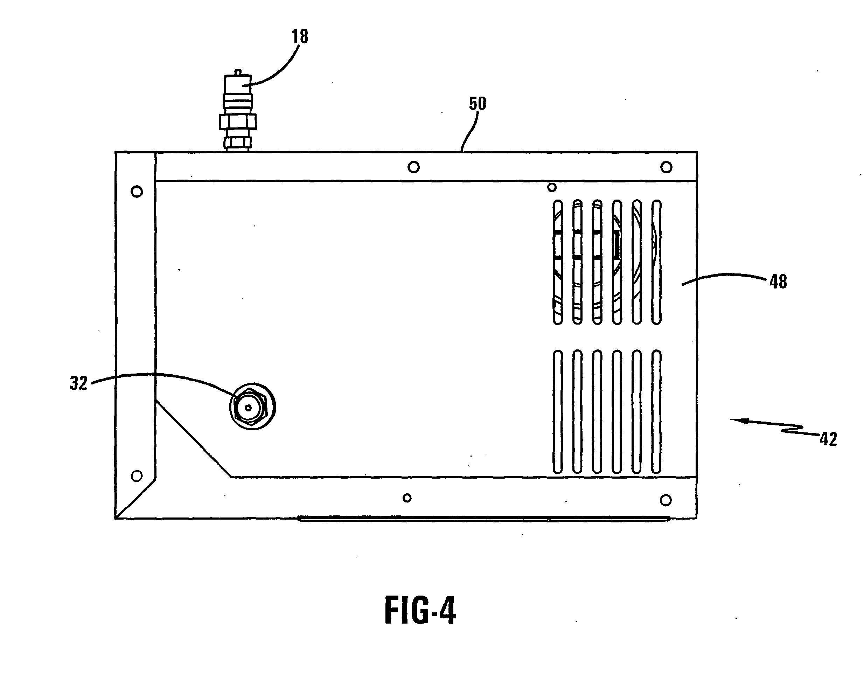

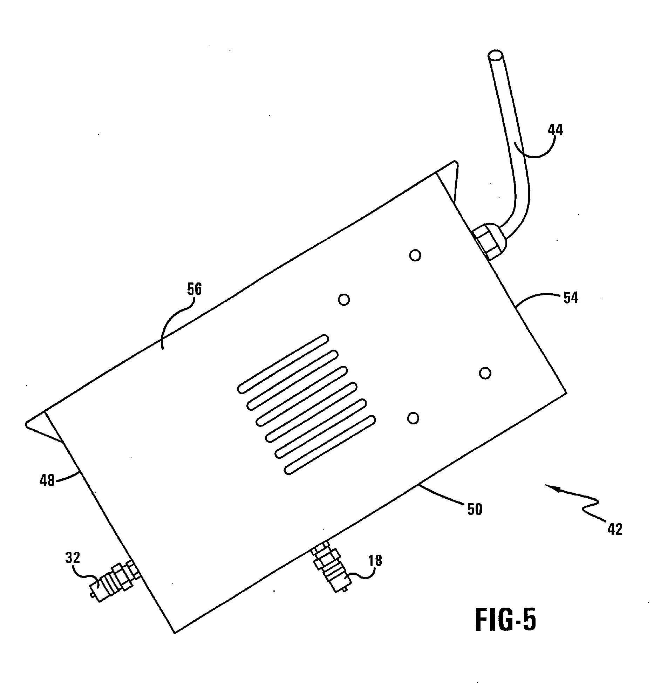

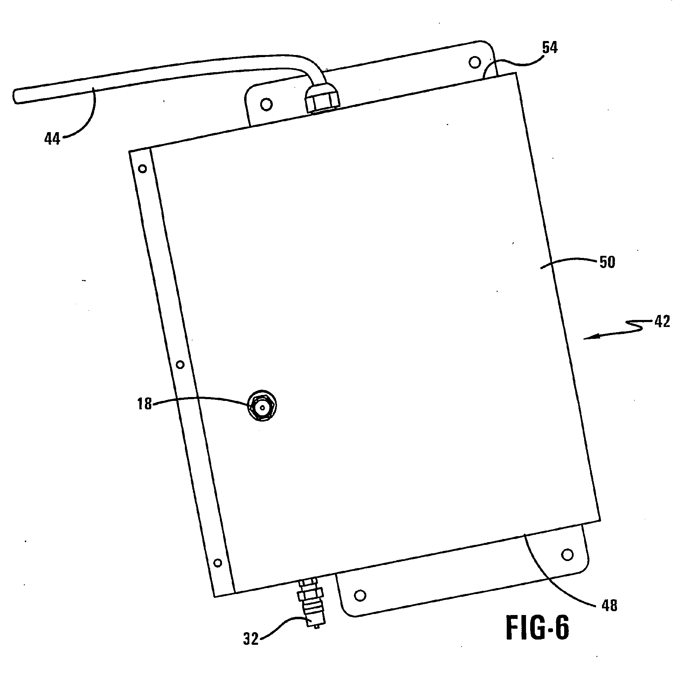

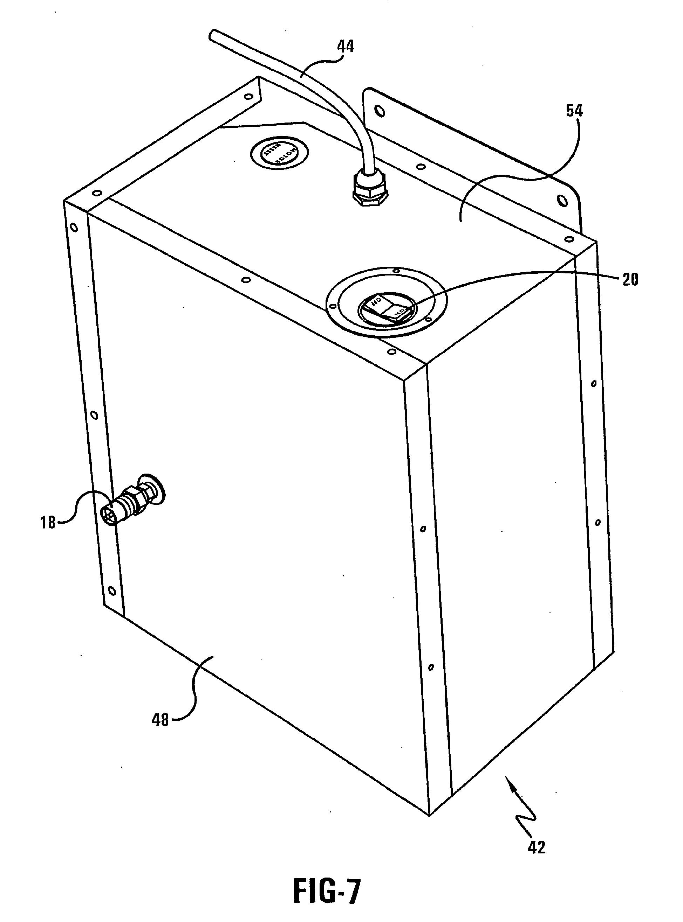

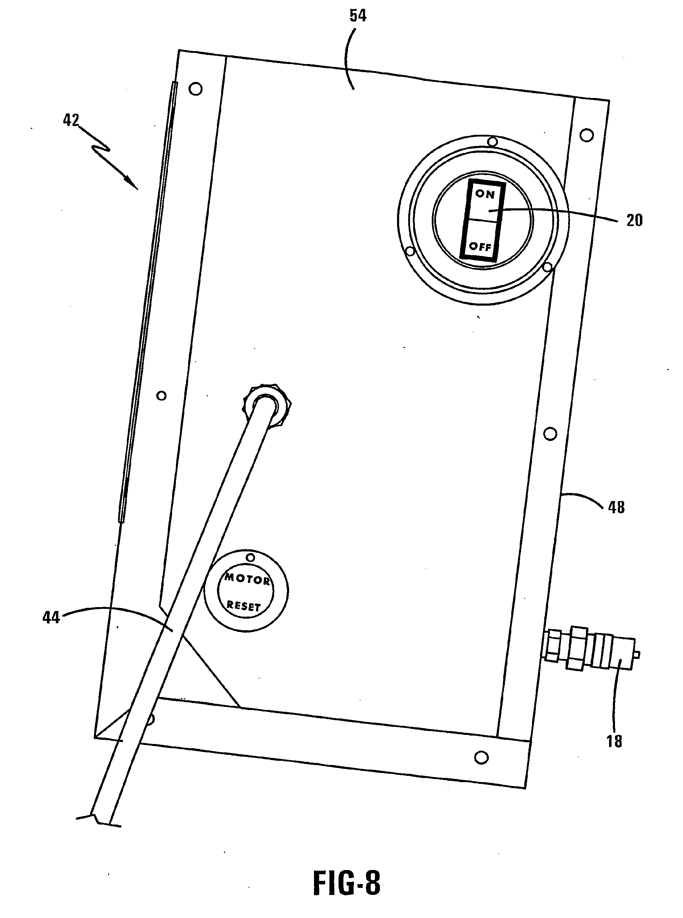

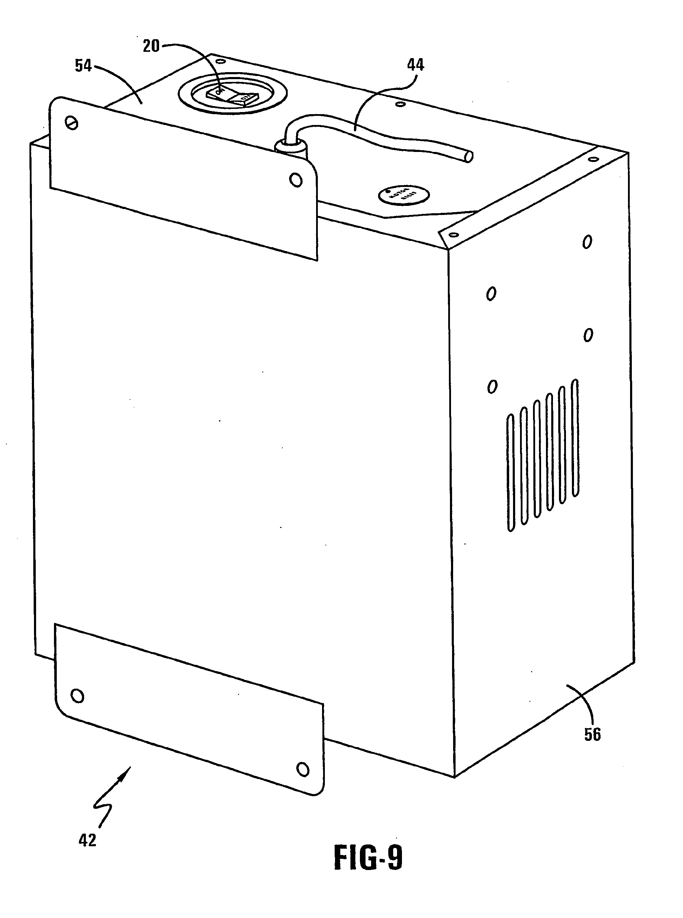

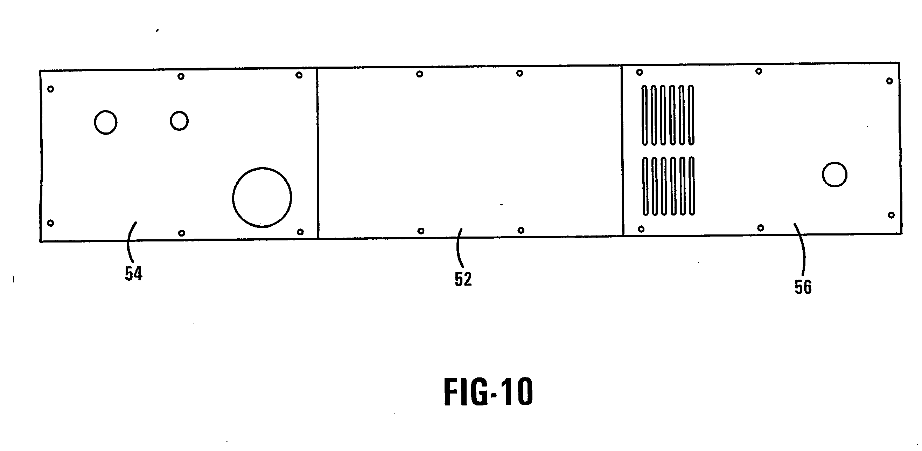

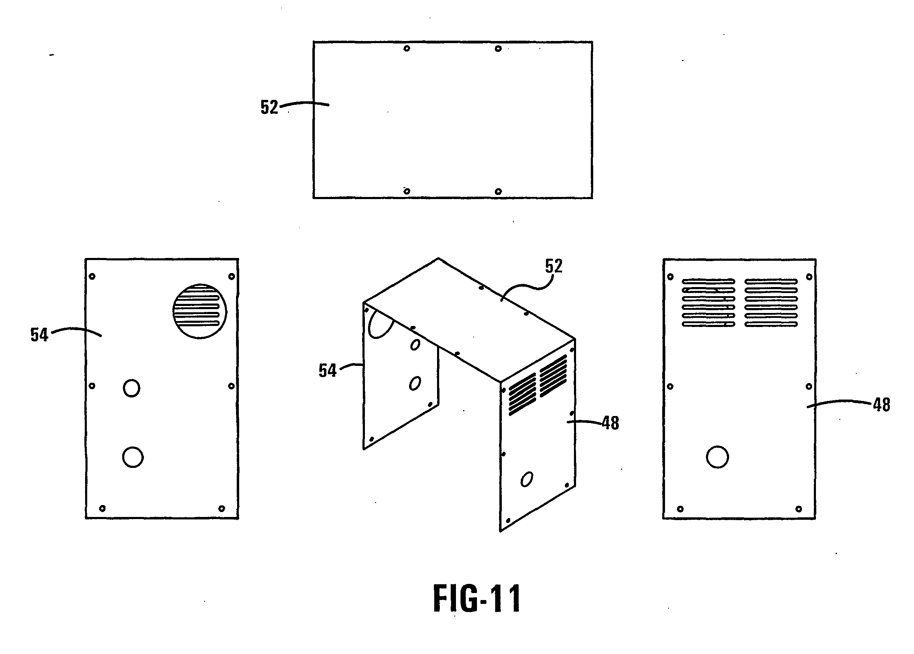

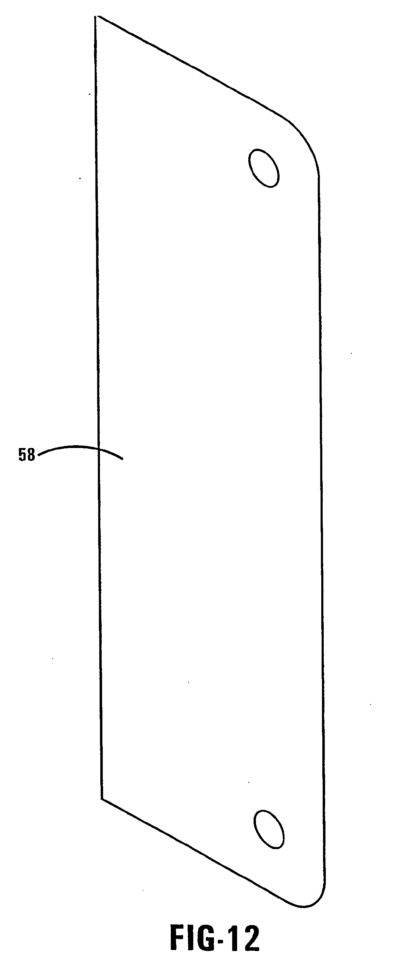

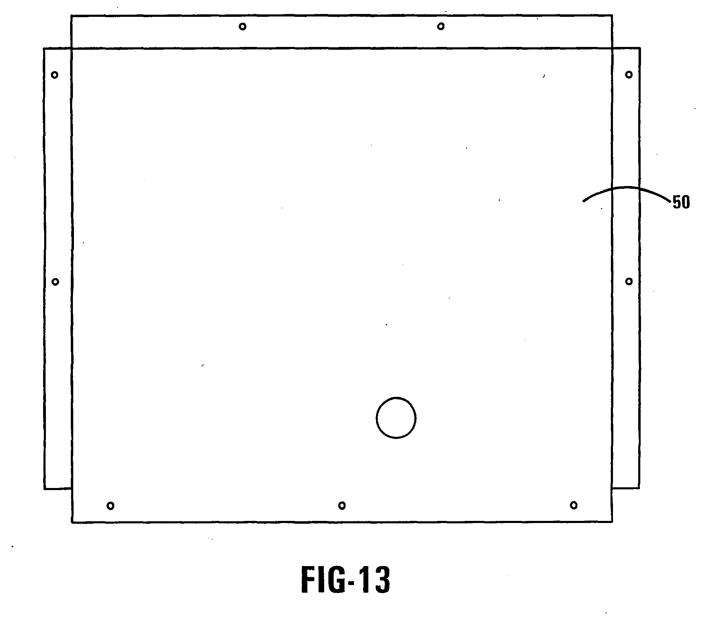

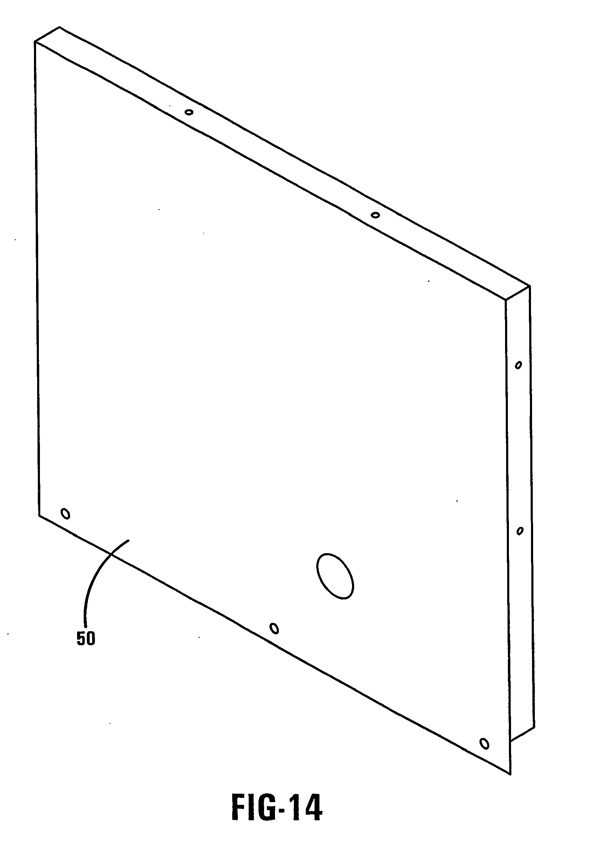

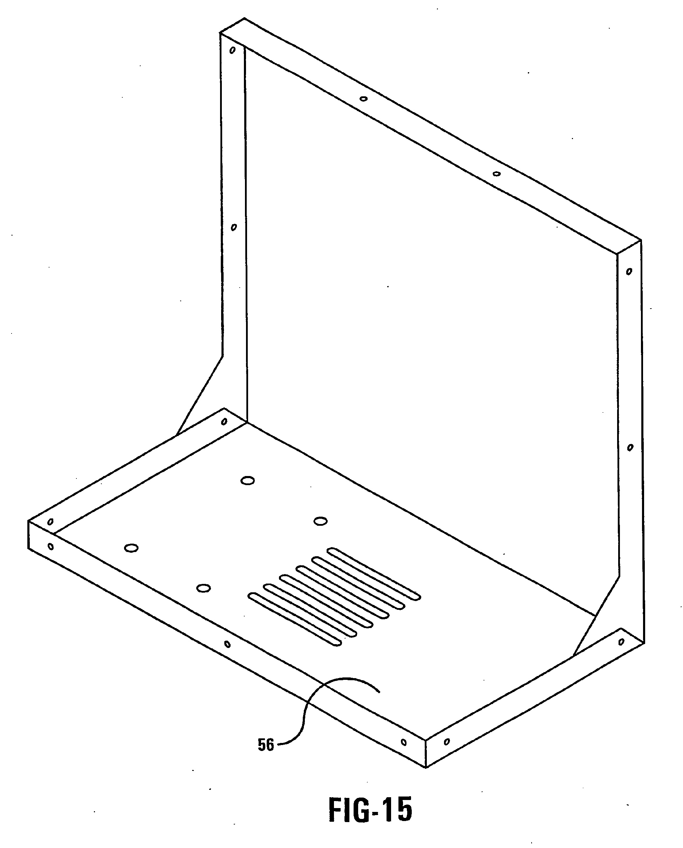

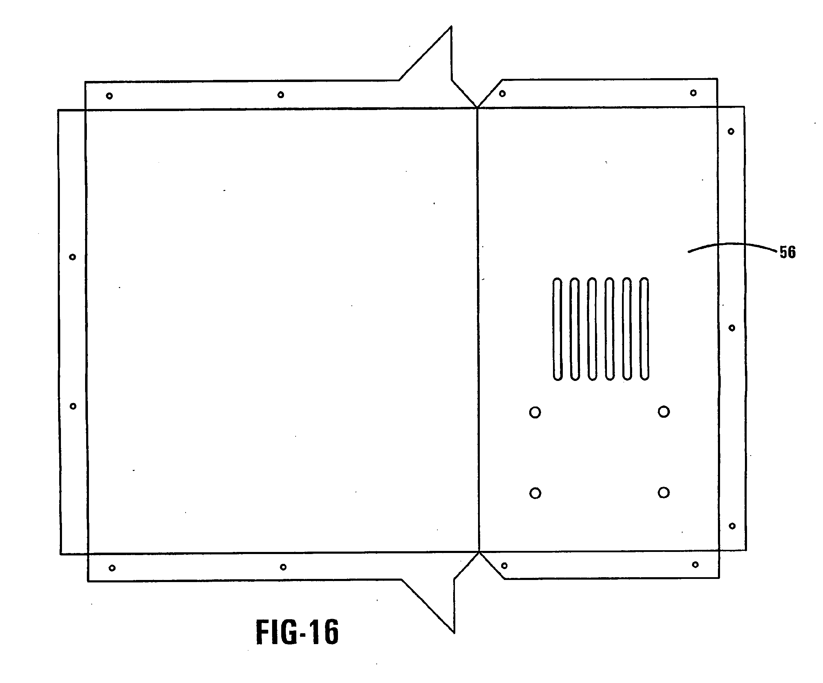

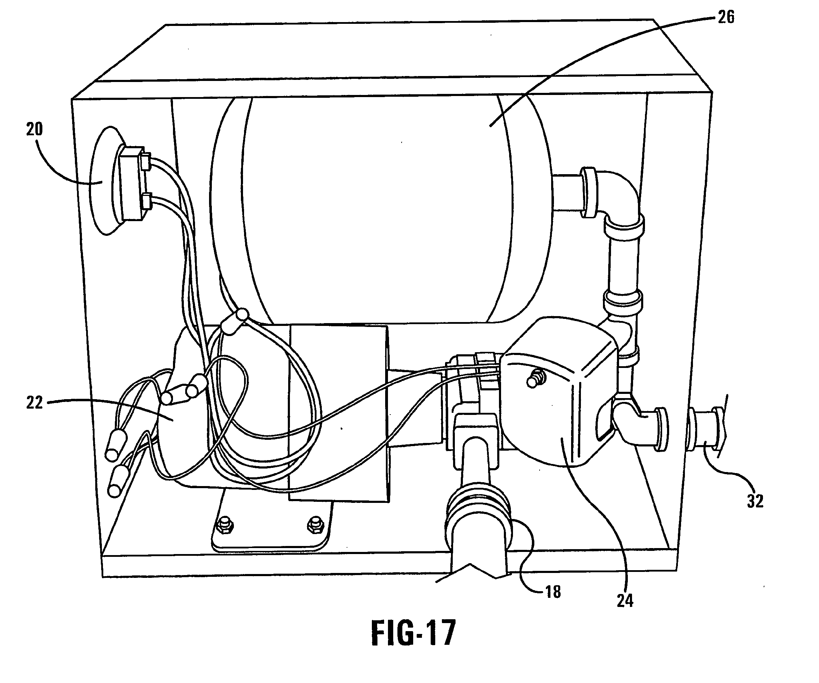

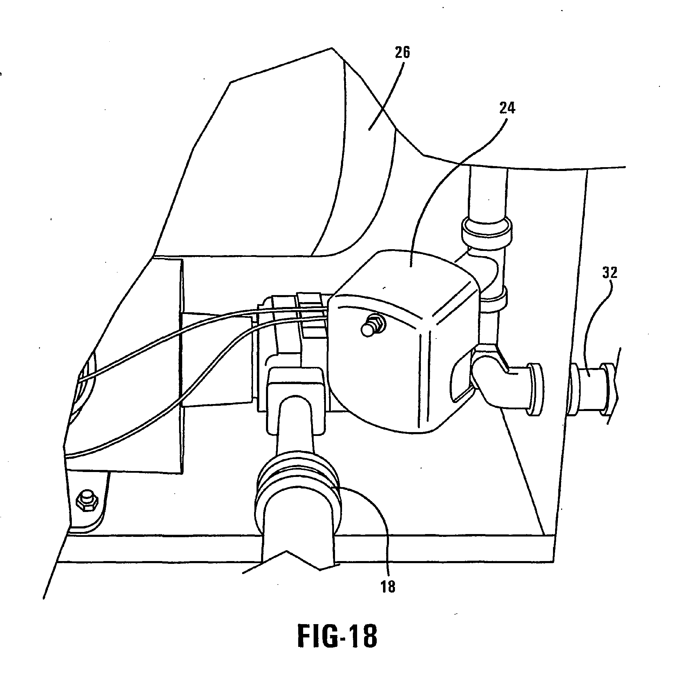

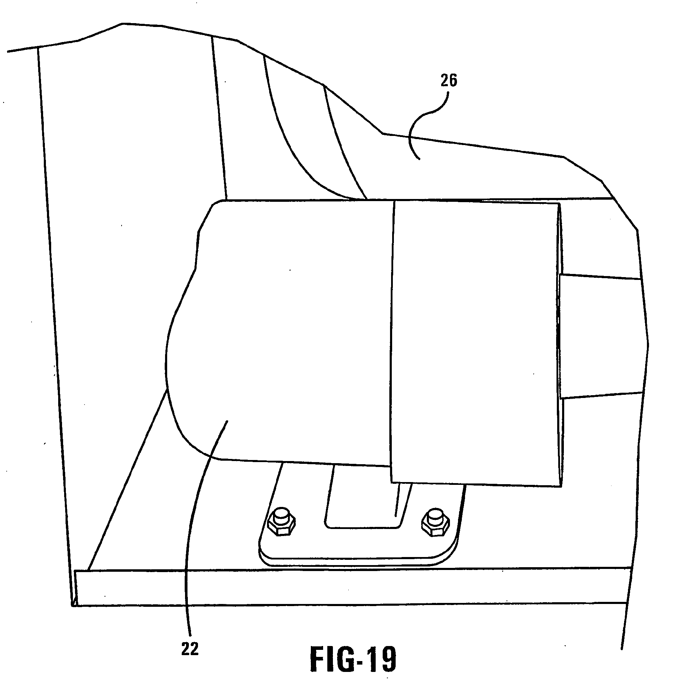

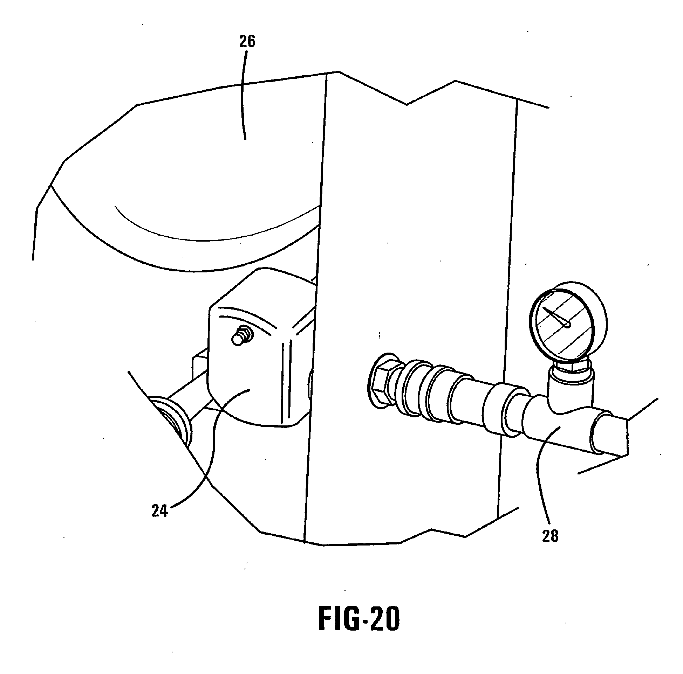

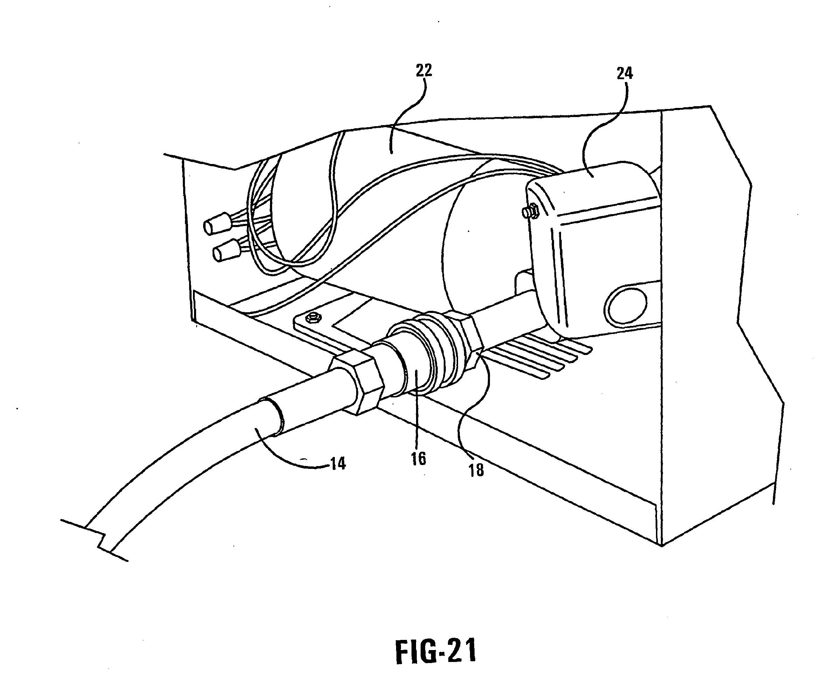

With reference to FIGURES 2-16, the housing 42 of the inventive system 10 is shown. In one embodiment of the invention, the pump 22, motor, pressure switch 24, expansion tank 26, and pressure relief valve 28 are all located within the housing 42. In another embodiment, the pressure relief valve 28 is located outside of the housing 42. Within the housing 42, the pump 22, expansion tank 26 , pressure switch 24, and relief valve 28 are connected via tubing 14. The housing 42 ha an outlet side 48, a front 50, a top 52, a switch side 54, a base 56, and an ear 58. In one embodiment, a power cord 44 is attached to the housing 42. With reference now to FIGURES 17-21, the inventive system 10 is shown within the housing 42.

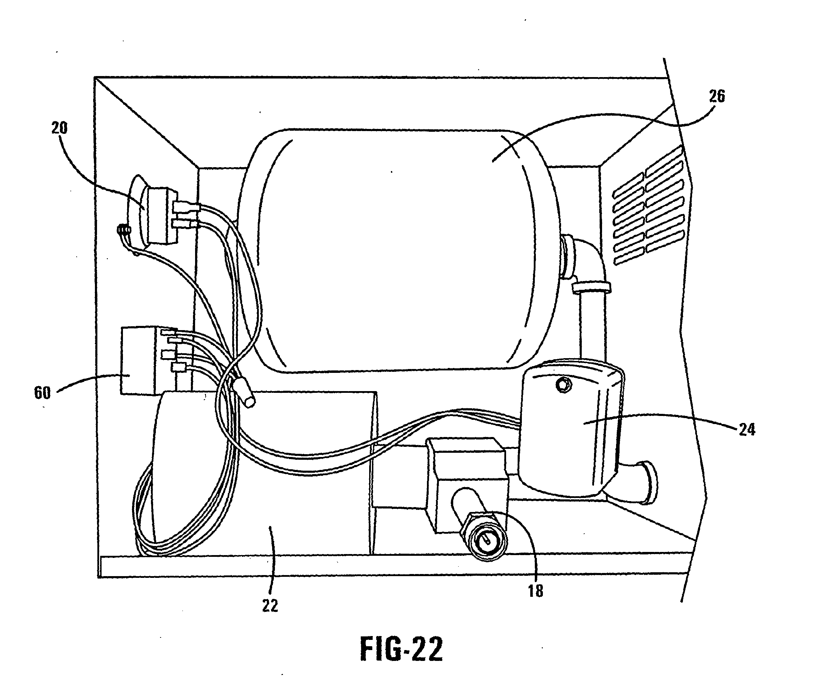

With reference now to FIGURES 1-21, the inventive system 10 is connected to pressurized lines that run through a restaurant, or any other establishment that requires cooking oil. The pumping mechanism, in this embodiment, is located within a housing 42, which is placed on a wall near where the restaurant stores their cooking oil. The tubing 14 extends out to the location of the fryers 40, where the user of the system has a hand-held wand 46 with an on/off trigger (although it is to be understood that any means of dispensing the oil may be used, as long as chosen using sound engineering judgment) that allows the easy, efficient dispensing of the fresh cooking oil. In one embodiment, as shown in FIGURE 22, a timer relay 60 prevents the pump 22 from running forever should the oil supply be empty or if a supply pipe burst. The relay 60 goes between the on/off switch 20 and the pressure switch 24. If a pipe leaks, the wand 46 malfunctions, or some other problem that would cause a pressure/liquid leak, the relay 60 will automatically shut off the pump 22 after a specific period of time. The timer relay 60 can be set to any time desired by the user, as long as chosen using sound engineering judgment. In order to restart the pump 22, the on/off switch 20 is cycled to reset the relay 60. The operator would notice that the system 10 had stopped pumping, see the leak, and have the system 10 repaired prior to turning the pump 22 on again. For normal operations, without problems, the relay 60 resets itself every time the pressure reaches the "off" pressure. This eliminates the need to manually reset the system 10, unless there is a problem.

The process begins with a certain amount of oil located in an oil reservoir 12. The pressure switch 24 is set to a particular "on" pressure and a particular "off" pressure, which in one embodiment is 30 psi (210kPa) and 50 psi (350kPa), respectively. The pressure relief valve 28, which is used to prevent an explosion if too much pressure is built up, is set at a level above the "off" pressure. In this embodiment, the pressure relief valve 28 is set at 75 psi (520kPa). The expansion tank 26 is set at approximately the pressure of the "on" pressure, so in one embodiment would be 30 psi (210kPa). The tubing 14 is placed into the oil reservoir 12 and the pumping mechanism 22 is turned on. The pump 22 sucks the oil through the tubing 14 into the expansion tank 26. In this embodiment, the inside of the expansion tank 26 has an expandable bladder (not shown) that expands as the tank 26 is filled with oil. When the expanding bladder creates pressure within the tank 26 at 50 psi (350kPa) or whatever the "off" pressure is set to, the pump 22 is automatically shut off. Once the pump 22 has been shut off, the oil is ready to be dispensed. In order to dispense the oil, the on/off trigger on the wand 46 is depressed and the oil flows into the fryer 40. As the oil is flowing from the expansion tank 26, the bladder is contracting, and the pressure within the tank 26 is decreasing. When the pressure in the tank 26, as measured by the pressure switch 24, reaches 30 psi (210kPa) or whatever the "on" pressure is set to) the pump 22 is automatically turned back on, and more oil is sucked from the oil reservoir 12. In this manner, the inventive system 10 allows the user to have a continual flow of oil from the reservoir 12 to the fryer 40, without the need to manually turn on and off the pump 22.

Although the previous embodiment has been described in terms of cooking oil, it is to be understood that the inventive system 10 could be used in the dispensing of any type of fluid. It is also to be understood that the materials from the which the tubing, housing, wand, pipes, and the other components are made is not critical to the invention, and any material, chosen using sound engineering judgment can be used. The disconnect fittings at the inlet, outlet, and wand allow the various components to be detached as necessary, but are not critical to the invention. It is also to be understood that the on and off pressures can be any pressure chosen using sound engineering judgment.

At least one embodiment has been described, hereinabove. It will be apparent to those skilled in the art that the above methods may incorporate changes and modifications without departing from the general scope of this invention. It is intended to include all such modifications and alterations in so far as they come within the scope of the appended claims or the equivalents thereof.

Having thus described the invention, it is now claimed:

## Claims

1. A fluid dispensing apparatus **characterized by**:
a pump (22);
a motor, the motor operatively connected to the pump;
an expansion tank (26);
a pressure switch (24) arranged to measure the pressure in the expansion tank; having an on pressure and an off pressure, wherein the off pressure is greater than the on pressure;
a fluid dispenser (46); and
tubing, the tubing being operatively connected to the pump to provide the fluid to the expansion tank and being connected to supply fluid from the expansion tank to the fluid dispenser;
the apparatus being further **characterized by**
an expandable bladder, the expandable bladder operatively connected within the expansion tank, the expandable bladder having a pressure, the pressure being set at approximately the on pressure.

2. The apparatus of claim 1, wherein the pump (22) is at a remote location from the fluid dispenser (46).

3. The apparatus of claim 1, wherein the apparatus is further **characterized by** a pressure relief valve (28).

4. The apparatus of claim 1, wherein the pump (22), the motor, the pressure switch (24), the expansion tank (26), and the expandable bladder are located within a housing.

5. The apparatus of claim 1, wherein the on pressure is greater than 10 psi (70kPa) and the off pressure is less than 75 psi (520kPa).

6. The apparatus of claim 5, wherein the on pressure is approximately 30 psi (210kPa) and the off pressure is approximately 50 psi (350kPa).

7. The apparatus of claim 3, wherein the pressure relief valve (28) is set at approximately 75 psi (520kPa).

8. The apparatus of claim 2, wherein the apparatus is connected to an associated wall.

9. The apparatus of claim 8, wherein the apparatus is further **characterized by**:
tubing; and,
an oil reservoir (12), the tubing operatively connected to an inlet, the inlet being operatively connected to the pump (22).

10. The apparatus of claim 9, wherein the fluid dispenser dispenses oil into an associated fryer.

11. The apparatus of claim 7, wherein the apparatus is further **characterized by** a timer relay (60).

12. A method for dispensing fluid, the method **characterized by** the steps of:
providing a pump,
providing a fluid reservoir
increasing pressure within an expansion tank by drawing fluid from the reservoir;
automatically shutting off the pump when the pressure within the expansion tank reaches a predetermined level,
providing a fluid dispenser (46); and
providing tubing, the tubing being operatively connected to the pump to provide the fluid to the expansion tank and being connected to supply fluid from the expansion tank to the fluid dispenser;
the method being further **characterized by** the steps of:
providing an expandable bladder, the expandable bladder operatively connected within the expansion tank.

13. The method of claim 12, wherein the method is further **characterized by** the steps of:
after the pump has been shut off, decreasing the pressure within the expansion tank by dispensing fluid; and,
automatically turning on the pump when the pressure within the expansion tank reaches a predetermined level.

14. The method of claim 13, wherein the process of automatically turning on and/or shutting off the pump can be repeated multiple times.

15. The method of claim 14, wherein the predetermined level for shutting off the pump is approximately 50 psi (350kPa).

16. The method of claim 15, wherein the predetermined level for turning the pump back on is approximately 30 psi (210kPa).

17. The method of claim 12, wherein the method is further **characterized by** the steps of:
providing a pressure relief valve to automatically shut off power when a predetermined pressure is reached;
providing a fluid dispenser for dispensing the oil into the associated fryer; and,
providing a timer relay for preventing the pump from continuous running if the reservoir is empty.

18. The method of claim 12, wherein the method is used for dispensing fresh cooking oil from an oil reservoir into an associated fryer.

19. The method of claim 13, wherein the pump and expansion tank are located remotely from an associated fryer.

20. The method of claim 12 further comprising:
inserting tubing into the fluid reservoir, the tubing being operatively connected to the pump;
creating a suction force, in the tubing in the fluid reservoir, via the pump and tubing.

## Patentansprüche

1. Fluidabgabeeinrichtung **gekennzeichnet durch** eine Pumpe (22),
einen Motor, wobei der Motor betriebsmäßig mit der Pumpe verbunden ist,
einen Expansionstank (26),
einen Druckschalter (24), der angeordnet ist, um den Druck in dem Expansionstank zu messen, mit einem Einschaltdruck und einem Ausschaltdruck, wobei der Ausschaltdruck größer als der Einschaltdruck ist,
ein Fluidabgabeelement (46) und
eine Rohrleitungsanordnung, wobei die Rohrleitungsanordnung betriebsmäßig mit der Pumpe verbunden ist, um Fluid zu dem Expansionstank zu liefern, und verbunden ist, um Fluid von dem Expansionstank zu dem Fluidabgabeelement zu liefern,
wobei die Einrichtung ferner **gekennzeichnet ist durch** einen expandierbaren Balg, wobei der expandierbare Balg betriebsmäßig in dem Expansionstank verbunden ist, wobei der expandierbare Balg einen Druck hat, wobei der Druck auf etwa den Einschaltdruck eingestellt ist.

2. Einrichtung nach Anspruch 1, wobei die Pumpe (22) an einem Ort entfernt von dem Fluidabgabelement (46) ist.

3. Einrichtung nach Anspruch 1, wobei die Einrichtung ferner **gekennzeichnet ist durch** ein Überdruckventil (28).

4. Einrichtung nach Anspruch 1, wobei die Pumpe (22), der Motor, der Druckschalter (24), der Expansionstank (26) und der expandierbare Balg in einem Gehäuse angeordnet sind.

5. Einrichtung nach Anspruch 1, wobei der Einschaltdruck gröβer als 10 psi (70 kPa) und der Abschaltdruck geringer als 75 psi (520 kPa) ist.

6. Einrichtung nach Anspruch 5, wobei der Einschaltdruck etwa 30 psi (210 kPa) und der Abschaltdruck etwa 50 psi (350 kPa) ist.

7. Einrichtung nach Anspruch 3, wobei das Überdruckventil (28) auf etwa 75 psi (520 kPa) eingestellt ist.

8. Einrichtung nach Anspruch 2, wobei die Einrichtung mit einer zugeordneten Wand verbunden ist.

9. Einrichtung nach Anspruch 8, wobei die Einrichtung ferner **gekennzeichnet ist durch** eine
Rohrleitungsanordnung und
einen Ölbehälter (12), wobei die Rohrleitungsanordnung betriebsmäßig mit einem Einlass verbunden ist, wobei der Einlass betriebsmäßig mit der Pumpe (22) verbunden ist.

10. Einrichtung nach Anspruch 9, wobei die Fluidabgabeinrichtung Öl in eine zugeordnete Friteuse abgibt.

11. Einrichtung nach Anspruch 7, wobei die Einrichtung ferner durch ein Zeitrelais (60) **gekennzeichnet** ist.

12. Verfahren zur Abgabe eines Fluids, wobei das Verfahren durch folgende Schritte **gekennzeichnet** ist:
Bereitstellen einer Pumpe,
Bereitstellen eines Fluidbehälters,
Erhöhen des Drucks in einem Expansionstank durch Ziehen von Fluid aus dem Behälter,
automatisches Abschalten der Pumpe, wenn der Druck in dem Expansionstank ein vorgegebenes Niveau erreicht, Bereitstellen eines Fluidabgabeelements (46) und
Bereitstellen eines Rohrleitungsaufbaus, wobei der Rohrleitungsaufbau betriebsmäßig mit der Pumpe verbunden ist,
um das Fluid an den Expansionstank zu liefern, und verbunden ist, um Fluid von dem Expansionstank an das Fluidabgabeelement zu liefern,
wobei das Verfahren ferner durch die Schritte **gekennzeichnet** ist, dass
ein expandierbarer Balg bereitgestellt wird, wobei der expandierbare Balg betriebsmäßig mit dem Expansionstank verbunden ist.

13. Verfahren nach Anspruch 12, wobei das Verfahren ferner durch die folgenden Schritte **gekennzeichnet** ist:
Verringern des Drucks in dem Expansionstank durch Abgabe von Fluid, nachdem die Pumpe abgeschaltet worden ist, und
automatisches Einschalten der Pumpe, wenn der Druck in dem Expansionstank ein vorgegebenes Niveau erreicht.

14. Verfahren nach Anspruch 13, wobei der Vorgang des automatischen Ein- und/oder Abschaltens der Pumpe mehrere Male wiederholt werden kann.

15. Verfahren nach Anspruch 14, wobei das vorgegebene Niveau zum Abschalten der Pumpe etwa 50 psi (350 kPa) ist.

16. Verfahren nach Anspruch 15, wobei das vorgegebene Niveau zum Wiedereinschalten der Pumpe etwa 30 psi (210 kPa) ist.

17. Verfahren nach Anspruch 12, wobei das Verfahren ferner durch die folgenden Schritte **gekennzeichnet** ist:
Bereitstellen eines Überdruckventils, um den Strom automatisch abzuschalten, wenn ein vorgegebener Druck erreicht wird,
Bereitstellen eines Fluidabgabelements zum Abgeben des Öls in die zugeordnete Friteuse und
Bereitstellen eines Zeitrelais, um die Pumpe daran zu hindern, kontinuierlich zu laufen, wenn der Behälter leer ist.

18. Verfahren nach Anspruch 12, wobei das Verfahren verwendet wird, um frisches Speiseöl aus einem Ölbehälter in eine zugeordnete Friteuse zu geben.

19. Verfahren nach Anspruch 13, wobei die Pumpe und der Expansionstank entfernt von einer zugeordneten Friteuse angeordnet sind.

20. Verfahren nach Anspruch 12, ferner umfassend:
Einsetzen eines Rohrleitungsaufbaus in den Fluidbehälter,
wobei der Rohrleitungsaufbau betriebsmäßig mit der Pumpe verbunden ist,
Erzeugen einer Saugkraft in dem Rohrleitungsaufbau in dem Fluidbehälter über die Pumpe und den Rohrleitungsaufbau.

## Revendications

1. Appareil de distribution de fluide **caractérisé par** :
une pompe (22) ;
un moteur, le moteur étant raccordé de manière opérationnelle à la pompe ;
un vase d'expansion (26) ;
un commutateur de pression (24) agencé pour mesurer la pression dans le vase d'expansion et ayant une pression d'activation et une pression de désactivation, la pression de désactivation étant supérieure à la pression d'activation ;
un distributeur de fluide (46) ; et
une tuyauterie, raccordée de manière opérationnelle à la pompe pour amener le fluide au vase d'expansion, et raccordée pour alimenter le distributeur de fluide en fluide provenant du vase d'expansion;
l'appareil étant en outre **caractérisé par** :
une vessie expansible, raccordée de manière opérationnelle à l'intérieur du vase d'expansion, la vessie expansible ayant une pression, réglée approximativement à la pression d'activation.

2. Appareil selon la revendication 1, dans lequel la pompe (22) est à un emplacement à distance du distributeur de fluide (46).

3. Appareil selon la revendication 1, dans lequel l'appareil est en outre **caractérisé par** une soupape de décharge de pression (28).

4. Appareil selon la revendication 1, dans lequel la pompe (22), le moteur, le commutateur de pression (24), le vase d'expansion (26) et la vessie expansible sont positionnés à l'intérieur d'un boîtier.

5. Appareil selon la revendication 1, dans lequel la pression d'activation est supérieure à 10 psi (70 kPa) et la pression de désactivation est inférieure à 75 psi (520 kPa).

6. Appareil selon la revendication 5, dans lequel la pression d'activation est approximativement de 30 psi (210 kPa) et la pression de désactivation est approximativement de 50 psi (350 kPa).

7. Appareil selon la revendication 3, dans lequel la soupape de décharge de pression (28) est réglée approximativement sur 75 psi (520 kPa).

8. Appareil selon la revendication 2, dans lequel l'appareil est raccordé à une paroi associée.

9. Appareil selon la revendication 8, dans lequel l'appareil est en outre **caractérisé par** :
une tuyauterie ; et
un réservoir d'huile (12), la tuyauterie étant raccordée de manière opérationnelle à une entrée, l'entrée étant raccordée de manière opérationnelle à la pompe (22).

10. Appareil selon la revendication 9, dans lequel le distributeur de fluide distribue de l'huile dans une friteuse associée.

11. Appareil selon la revendication 7, dans lequel l'appareil est en outre **caractérisé par** un relais de temporisation (60).

12. Procédé pour distribuer un fluide, le procédé étant **caractérisé par** les étapes consistant à :
fournir une pompe,
fournir un réservoir de fluide,
augmenter la pression à l'intérieur d'un vase d'expansion en aspirant le fluide du réservoir ;
arrêter automatiquement la pompe lorsque la pression dans le vase d'expansion atteint un niveau prédéterminé,
fournir un distributeur de fluide (46) ; et
fournir une tuyauterie raccordée de manière opérationnelle à la pompe pour amener le fluide jusqu'au vase d'expansion et raccordée pour alimenter le distributeur de fluide en fluide provenant du vase d'expansion;
le procédé étant en outre **caractérisé par** les étapes consistant à :
fournir une vessie expansible raccordée de manière opérationnelle à l'intérieur du vase d'expansion.

13. Procédé selon la revendication 12, dans lequel le procédé est en outre **caractérisé par** les étapes consistant à :
après que la pompe a été arrêtée, diminuer la pression dans le vase d'expansion en distribuant le fluide ; et
mettre automatiquement la pompe en marche lorsque la pression à l'intérieur du vase d'expansion atteint un niveau prédéterminé.

14. Procédé selon la revendication 13, dans lequel le procédé consistant à mettre en marche et/ou à arrêter automatiquement la pompe peut être répété plusieurs fois.

15. Procédé selon la revendication 14, dans lequel le niveau prédéterminé pour arrêter la pompe est approximativement de 50 spi (350 kPa).

16. Procédé selon la revendication 15, dans lequel le niveau prédéterminé pour remettre la pompe en marche est approximativement de 30 psi (210 kPa).

17. Procédé selon la revendication 12, dans lequel le procédé est en outre **caractérisé par** les étapes consistant à :
fournir une soupape de décharge de pression pour arrêter automatiquement le courant lorsqu'une pression prédéterminée est atteinte ;
fournir un distributeur de fluide pour distribuer l'huile dans la friteuse associée ; et
fournir un relais de temporisation pour empêcher le fonctionnement continu de la pompe si le réservoir est vide.

18. Procédé selon la revendication 12, dans lequel le procédé est utilisé pour distribuer de l'huile de friture fraîche à partir d'un réservoir d'huile dans une friteuse associée.

19. Procédé selon la revendication 13, dans lequel la pompe et le vase d'expansion sont positionnés à distance d'une friteuse associée.

20. Procédé selon la revendication 12, comprenant les étapes consistant à :
insérer la tuyauterie dans le réservoir de fluide, la tuyauterie étant raccordé de manière opérationnelle à la pompe ;
créer une force d'aspiration dans la tuyauterie dans le réservoir de fluide, via la pompe et la tuyauterie.
